# EUROPEAN PATENT APPLICATION

(11) **EP 4 834 069 A1**
(43) Date of publication of application: **04.11.2026**
(21) Application number: 25315147.6
(22) Date of filing: 29.04.2025
(51) Int. Cl.: A01B 69/00, A01B 69/04, A01B 63/112, A01B 63/114

(54) **AGRICULTURAL EQUIPMENT SYSTEM**

(71) Applicant: CNH Industrial France S.A.S., 91150 Morigny-Champigny (FR)
(72) Inventor: Le Brech, Laurent, 91150 Morigny-Champigny (FR); Rodriguez, Paloma, 91150 Morigny-Champigny (FR)
(74) Representative: CNH Industrial IP Department

(57) **Abstract**

An agricultural equipment system (100) comprising a trajectory control system (400) and an agricultural implement (200) having a soil substrate engagement device (202). The agricultural implement (200) may be configured to be coupled to a body (502) of a drive unit (500). The drive unit (500) may be operable to translate the agricultural implement (200) relative to the soil substrate (300). The trajectory control system (400) may be operable to control the agricultural implement (200) to perform a movement action relative to the drive unit body (502) to vary the magnitude, direction, point of attack and/or distribution of a drag force (Fd) generated by the engagement of the soil substrate engagement device (202) with the soil substrate (300) to thereby vary torque around the z-axis of the drive unit body (502) to generate a yaw rotation force on the drive unit body (502).

## Description

The present disclosure relates to an agricultural equipment system.

### BACKGROUND OF THE INVENTION

Tracked and/or wheeled vehicles are commonly used on soft and/or wet agricultural terrain, for example in crop growing fields.

A problem that arises is that grip between the ground and different parts of the track and/or different wheels may vary. This is especially likely to occur when the vehicle is travelling along an inclined surface where the weight of the vehicle is inherently unevenly distributed. Alternatively, it may occur if the ground being travelled over has a poor or varied consistency. Under these circumstances the vehicle may turn or slide away from its intended direction of travel, which is referred to as "lateral drift" (e.g. at least part of the vehicle drifting sideways, causing it to move away from the desired direction of travel). This is undesirable as control of the vehicle is less precise and less predictable than may be required.

In some applications, for example where agricultural vehicles are used to travel between rows of crops, there may be limited space to manoeuvre a tracked vehicle. Lateral drift and the effect on direction control may cause collision between a vehicle and the crops, resulting in agricultural losses and/or damage to the vehicle.

Hence an agricultural equipment system which is configured to enable greater path control of an agricultural vehicle compared to examples of the related art is highly desirable.

### SUMMARY OF THE INVENTION

According to the present disclosure there is provided an apparatus and method as set forth in the appended claims. Other features of the invention will be apparent from the dependent claims, and the description which follows.

Accordingly there may be provided an agricultural equipment system (100). The agricultural equipment system (100) may comprise an agricultural implement (200) comprising a soil substrate engagement device (202) configured to engage with a soil substrate (300). The agricultural equipment system (100) may comprise a trajectory control system (400). The agricultural implement (200) may be configured to be coupled to a body (502) of a drive unit (500) such that the agricultural implement (200) extends from a first end (504) of the drive unit body (502). The drive unit (500) may be operable to translate the agricultural implement (200) relative to the soil substrate (300). The drive unit body (502) may extend along an x-axis. The first end (504) of the drive unit body (502) and a second end (506) of the drive unit body (502) may be spaced apart from one another along the x-axis. The drive unit body (502) may extend along a y-axis. A first side (508) of the drive unit body (502) and a second side (510) of the drive unit body (502) may be spaced apart from one another along the y-axis. The x-axis may be at right angles to the y-axis. The drive unit body (502) my extend along a z-axis. The z-axis may be at right angles to the x-axis and y-axis. An upper side (512) of the drive unit body (502) and a lower side (514) of the drive unit body (502) may be spaced apart from one another along the z-axis. The z-axis may define a drive unit yaw axis.

A first side (208) of the agricultural implement (200) and a second side (210) of the agricultural implement (200) may be spaced apart from one another in a direction along the y-axis. The soil substrate engagement device (202) may extend across the width of the agricultural implement (200). The trajectory control system (400) may be operable to control the agricultural implement (200) to perform a movement action relative to the drive unit body (502) to vary the magnitude, direction, point of attack and/or distribution of a drag force (Fd) generated by the engagement of the soil substrate engagement device (202) with the soil substrate (300) to thereby vary torque around the z-axis of the drive unit body (502) to generate a yaw rotation force on the drive unit body (502) in an x-y plane defined by the x-axis and y-axis as the drive unit (500) translates with the agricultural implement (200) relative to the soil substrate (300).

An agricultural equipment system (100) wherein the movement action comprises rolling the agricultural implement (200) about the x-axis to vary the extent to which the soil substrate engagement device (202) engages with the soil substrate (300) along its width.

An agricultural equipment system (100) wherein the movement action comprises translating the agricultural implement (200) in a direction along the y-axis to vary the location relative to the drive unit body (502) which the soil substrate engagement device (202) engages with the soil substrate (300).

An agricultural equipment system (100) wherein the movement action comprises pivoting the agricultural implement (200) about a direction parallel to the z-axis to vary the angle which the soil substrate engagement device (202) engages the soil substrate (300) along its width.

In response to the trajectory control system (400) detecting an unintended lateral movement of the drive unit (500), the trajectory control system (400) is operable to control the agricultural implement (200) to perform the movement action to change the yaw rotation force on the drive unit body (502) in the x-y plane as the drive unit (500) translates with the agricultural implement (200) relative to the soil substrate (300).

The agricultural equipment system (100) may comprise at least one of :
(a) a positioning sensor system (700) operable to record positioning of the vehicle relative to an intended trajectory;
(b) a traction sensor system (702) operable to record traction between the drive unit (500) and the soil substrate (300) on the first side (508) and second side (510) of the drive unit (500);
(c) a depth sensor system (704) operable to record depth of soil substrate engagement device (202) in the soil substrate (300) its width;
(d) a positioning sensor system (706) located on the trajectory control system (400) to record a roll angle of the soil substrate engagement device (202) about the x-axis, a translation of the soil substrate engagement device (202) along the y-axis and/or a pivot angle of the soil substrate engagement device (202) about a direction parallel to the z-axis;
(e) a force sensor system operable to measure the force by the agricultural implement (200) on the drive unit (500); and/or
(f) a motion sensor system operable to determine the momentum imparted to the drive unit (500) from the agricultural implement (200); wherein the trajectory control system (400) is operable to control the agricultural implement to perform the movement action in dependence of data obtained from the or each sensor system.

The agricultural equipment system (100) may comprise a three point hitch (800). The agricultural implement (200) being coupled to the drive unit body (502) via the three point hitch (800).

The three point hitch (800) may comprise two side link arms (802) spaced apart along the y-axis, a central link arm (804) located between the two side link arms (802), each of the link arms (802, 804) configured to couple the drive unit (500) to the agricultural implement (200).

Each side link arm (802) may comprise a roll control actuator (806). The trajectory control system (400) may be operable to control each roll control actuator (806) independently so as to roll the agricultural implement (200) about the x-axis.

The agricultural equipment system (100) may comprise a y-axis translation actuator (808), the agricultural implement (200) being coupled to the drive unit body (502) via the y-axis translation actuator (808), the y-axis translation actuator (808) being operable to translate the agricultural implement (200) in a direction along the y-axis.

The agricultural equipment system (100) may comprise a z-axis pivot actuator (810), the agricultural implement (200) being coupled to the drive unit body (502) via the z-axis pivot actuator (810), the z-axis pivot actuator (810 being operable to pivot the agricultural implement (200) about a direction parallel to the z-axis.

The soil substrate engagement device (202) may comprise a plurality of soil substrate penetration members (206) spaced apart along the width of the agricultural implement (200), each soil substrate penetration member (206) being configured to engage with and/or extend into the soil substrate (300).

The agricultural implement (200) may be a plough, harrow, cultivator, weeder, hoe or a tiller.

There may be provided an agricultural equipment assembly (600) comprising a drive unit (500) and an agricultural equipment system (100) according to the present disclosure coupled to the drive unit (500).

The drive unit (500) may comprise a steering system (520). The trajectory control system (400) and steering system (520) may be operable in dependence of each other to achieve a desired trajectory of the drive unit (500).

The drive unit (500) may be a vehicle (110) provided as an autonomous vehicle or a manually operated vehicle.

The drive unit (500) may be a wheeled vehicle and/or a tracked vehicle.

The agricultural equipment system (100) may be configured for use in a row plantation.

There may be provided a method of adjusting a trajectory of a moving agricultural equipment assembly (600). The agricultural equipment assembly (600) may comprise an agricultural implement (200) comprising a soil substrate engagement device (202) configured to engage with a soil substrate (300).

The agricultural equipment assembly (600) may comprise a trajectory control system (400). The agricultural equipment assembly (600) may comprise a drive unit (500). The agricultural implement (200) may be coupled to the drive unit (500) such that the agricultural implement (200) extends from a first end (504) of the drive unit body (502). The drive unit (500) may be operable to translate the agricultural implement (200) over and through the soil substrate (300). The soil substrate engagement device (202) may extend across the width of the agricultural device in a direction along a y-axis.

The method may comprise the steps of, in response to the trajectory control system (400), detecting an unintended lateral movement of the drive unit (500), the trajectory control system (400) controlling the agricultural implement (200) to perform a movement action relative to the drive unit body (502) to vary the magnitude, point of attack and/or distribution of a drag force (Fd) generated by the engagement of the soil substrate engagement device (202) with the soil substrate (300) to thereby vary torque around the z-axis of the drive unit body (502) to generate a yaw rotation force on the drive unit body (502) in an x-y plane defined by the x-axis and y-axis as the drive unit (500) translates with the agricultural implement (200) relative to the soil substrate (300).

Hence there may be provided an agricultural equipment system which is configured to enable greater path control of an agricultural vehicle compared to examples of the related art.

### BRIEF DESCRIPTION OF THE DRAWINGS

Examples of the present disclosure will now be described with reference to the accompanying drawings, in which:
Figure 1 shows a schematic illustration of an agricultural equipment system in use according to the present disclosure;
Figure 2 is a schematic side view of a first example of an agricultural equipment system according to the present disclosure;
Figure 3 is a schematic side view of an example agricultural implement forming part of an agricultural equipment system according to the present disclosure;
Figure 4 is a schematic end view of the agricultural implement shown in figure 3;
Figure 5 is a schematic side view of a further example agricultural implement forming part of an agricultural equipment system according to the present disclosure;
Figure 6 is a schematic end view of the agricultural implement shown in figure 5;
Figures 7 to 9 are schematic plan views of the agricultural equipment system of the present disclosure in operation;
Figures 10 to 12 are schematic end views of the example agricultural equipment system of figures 7 to 9 in operation;
Figures 13 to 15 are schematic end views of the example agricultural equipment system of figures 7 to 9 in operation;
Figures 16 to 20 are schematic plan views of an example agricultural equipment system of the present disclosure in operation;
Figures 19 to 21 schematic plan views of an example agricultural equipment system of the present disclosure in operation;
Figures 22 to 24 are schematic plan views of an example agricultural equipment system of the present disclosure in operation; and
Figures 25 to 27 are schematic plan views of an example agricultural equipment system of the present disclosure in operation.

### DETAILED DESCRIPTION OF THE DRAWINGS

The present disclosure relates to an agricultural equipment system. The present disclosure relates to an agricultural equipment assembly. The present disclosure relates to a method of adjusting a trajectory of a moving agricultural equipment assembly.

The agricultural equipment assembly 600 may comprise a drive unit 500 and an agricultural equipment system 100 which are operable to be coupled to one another. The agricultural equipment system 100 may be coupled to the drive unit 500 to form the agricultural equipment assembly 600.

The drive unit may comprise a body 502 (e.g. the main structure of the drive unit, for example the support structure of the drive unit which carries a motor, battery, fuel, device management systems, and to which wheels and/or tracks may be coupled). The agricultural implement 200 may be configured to be coupled to the drive unit body 502. The agricultural implement 200 may be configured to be coupled to the drive unit body 502 such that the agricultural implement 200 extends from a first end 504 of the drive unit body 502.

The "drive unit" 500 may be provided as an apparatus configured to move in a controlled manner over a substrate (e.g. the ground, for example soil). The drive unit may be provided as an agricultural vehicle. By way of non-limiting example, the drive unit 500 may be provided as a tractor i.e. a powerful vehicle designed for agricultural, and/or construction tasks, which typically comprises a motor (e.g. petrol engine, diesel engine or electric motor), wheels and/or tracks coupled the body 502 and a hitch system (e.g. to attach agricultural implements 200).

The drive unit body 502 may extend along an x-axis, the first end 504 of the drive unit body 502 and a second end 506 of the drive unit body 502 may be spaced apart from one another along the x-axis. The drive unit body 502 may extend along a y-axis, a first side 508 of the drive unit body 502 and a second side 510 of the drive unit body 502 spaced apart from one another along the y-axis.

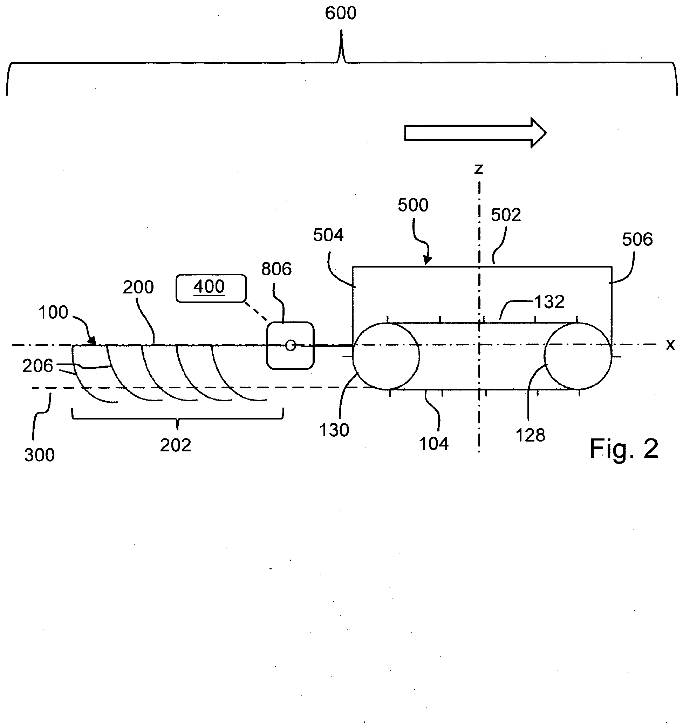

As illustrated in figure 2, the agricultural equipment assembly 600 may be arranged such that the first end 504 of the drive unit 500 faces towards the agricultural implement 200 and such that the first end 504 is the "rear" of the drive unit 500, and such that the second end 506 of the drive unit 500 faces away from the agricultural implement 200, the first end 504 being the "front" of the drive unit 500. The normal direction of travel of the drive unit 500 is indicated in figure 2 (e.g. with the second end 506 being in front of the first end 504 when moving). Hence the first side 508 may be the nominal "left" side of the drive unit 500, and the second side 510 maybe the nominal "right" side of the drive unit 500.

The drive unit body 502 may extend along a z-axis, an upper side 512 of the drive unit body 502 and a lower side 514 of the drive unit body 502 spaced apart from one another along the z-axis. The z-axis may define a drive unit yaw axis.

The x-axis may be at right angles to the y-axis. The z-axis may be at right angles to the x-axis and y-axis.

The drive unit 500 may be a vehicle provided as an autonomous vehicle and/or a manually operated vehicle.

In the present disclosure, the term "autonomous vehicle" may be understood to include a driverless vehicle, for example an unmanned vehicle. The term "autonomous vehicle" may be understood to include a vehicle which is not operated by a user within the vehicle. The term "autonomous vehicle" may be understood to include a vehicle which is configured to be operated remotely by a user and/or is operable to perform at least some functions without explicit and/or direct user commands.

In the present disclosure, the term "manually operated vehicle" may be understood to mean a vehicle which carries, and is controlled directly by, a user (e.g. a driver).

The drive unit 500 may be a tracked vehicle. The drive unit 500 may be a wheeled vehicle. Hence the drive unit 500 may be supported from the substrate/ground by wheels and/or tracks.

A "tracked vehicle" may be understood to be a vehicle comprising at least one continuous drive track extending between and around a set of wheels to form a track assembly. The track is located between the wheels and the substrate. There may be provided at least one track assembly on either side of the drive unit body 502. The drive unit may comprise propulsion means (e.g. a motor) operably coupled to one or more wheels, the wheels configured to engage with and move the track relative to the vehicle and hence move the vehicle along the substrate. An example of a tracked vehicle is illustrated in figures 2, 10 to 27.

As is understood in the art, the provision of track assemblies allows for the weight of the vehicle to be distributed over a large surface area of contact between the track assemblies and the substrate. This reduces the impact of the vehicle on the substrate such that the vehicle is less likely to sink and/or become stuck. These qualities make the vehicle suitable for use in agricultural processes, especially where soil is soft and/or where the ground is inclined and/or uneven.

The arrangement of a first track assembly along the first side of the vehicle body and a second track assembly along the second side of the vehicle body allows the vehicle weight and traction to be distributed between the two sides of the vehicle. Differential steering can thus be used to move the vehicle, such that it can be controlled to turn and travel in a straight line.

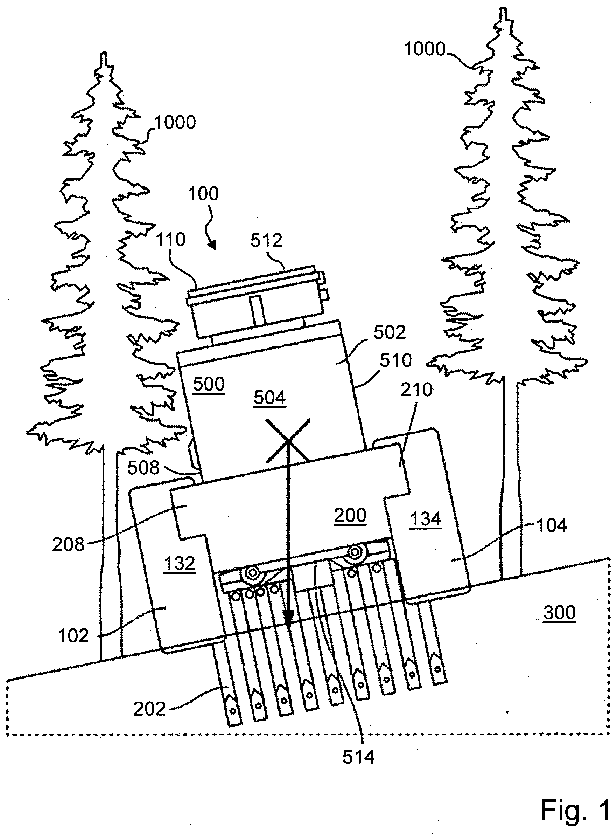

Figure 1 shows a schematic illustration of a tracked vehicle 110 according to the present disclosure. Figure 1 shows an end on view of the vehicle 110 (e.g. a rear view). The vehicle 110 is supported by a soil substrate 300 (e.g. the ground) and shown carrying out an agricultural process between rows of crops 1000. In the example shown, the soil substrate 300 is inclined at an angle to the horizontal, with the vehicle 110 travelling along the incline. However, the configuration of the agricultural equipment system 100 and agricultural equipment assembly 600 according to the present disclosure is also advantageous when the vehicle is travelling up an incline, down an incline or on the flat.

As illustrated, the first side 508 of the drive unit body 502 is provided with a first track assembly 102 and the second side 510 of the drive unit body 502 is provided with a second track assembly 104. Each of the first track assembly 102 and the second track assembly 104 are coupled to the drive unit body so as to support the drive unit body above the soil substrate 300.

As illustrated in figure 2 each of the first track assembly 102 and the second track assembly 104 may comprise a first track support wheel 128 and a second track support wheel 130 spaced apart from one another along the x-axis and a continuous drive track 132, 134 carried by the drive track support wheels 128, 130. Hence each continuous drive track 132, 134 may extend in a direction along the x-axis between the first track support wheel 128 and the second track support wheel 130.

At least one of the first track support wheel 128 and a second track support wheel 130 may configured as drive wheels which are engaged with the respective continuous drive track 132, 134 and driveable by a motor to thereby drive the respective continuous drive track 132, 134 and hence being operable to move the respective track assembly 102, 104, and hence move the vehicle 110.

A "wheeled vehicle" may be understood to be a form of transportation that moves using wheels in direct rolling contact with a supporting surface (e.g. the soil substrate). The number and arrangement of wheels may vary, for example two or more in either side, a single wheel at the front or rear or any other appropriate configuration.

The drive unit may comprise a steering mechanism. For a tracked vehicle the steering mechanism may comprise a system for driving one of the tracks at a different speed and/or in a different direction to the other. For a wheeled vehicle, the steering mechanism may comprise any appropriate arrangement, for example, a system in which one or more of the wheels are turned around a vertical axis.

The agricultural equipment system 100 of the present disclosure may be configured for use in a row plantation. A row plantation is an arrangement in which plants are provided in rows so that the vehicle is supported by the soil substrate between rows of plants, but aims to avoid contact with the plants. By way of non-limiting example, grapes, olives, coffee, berries, pistachios, citrus fruit and/or apples may form a row plantation.

The agricultural equipment system 100 may be configured for operation in a row plantation provided on the flat and/or at an angle (e.g. on a slope).

The agricultural equipment system 100 may comprise an agricultural implement 200. The drive unit 500 may be operable to translate the agricultural implement 200 relative to the soil substrate 300.

A first side 208 (e.g. left) of the agricultural implement 200 and a second side 210 (e.g. right) of the agricultural implement 200 may be spaced apart from one another in a direction along the y-axis, the soil substrate engagement device 202 extending across the width of the agricultural implement 200 (e.g. in a direction along the y-axis).

The agricultural implement 200 may extend from (e.g. extend from a coupling provided on) the first end 504 of the drive unit body 502.

The agricultural implement 200 may extend, at least in part, along the x-axis, for example at an acute angle relative to the x-axis.

The agricultural implement 200 may comprise a soil substrate engagement device 202 configured to engage with (for example penetrate) a soil substrate 300.

The soil substrate engagement device 202 may comprise a plurality of soil substrate penetration members 206 spaced apart from one another along the width of the agricultural implement 200 (e.g. in a row), each soil substrate penetration member 206 being configured to engage with and/or extend into the soil substrate 300. The soil substrate engagement device 202 may comprise a plurality of rows of soil substrate penetration members 206, the rows being spaced apart from one another along the length of the agricultural implement 200.

The soil substrate engagement device 202 may be provided as, or may comprise, fingers, teeth, tines, discs, blades, shanks and/or a mould board configured to engage with (for example penetrate) a soil substrate 300.

That is to say, the soil substrate penetration members 206 may be provided as, or may comprise, fingers, teeth, tines, discs, blades, shanks and/or a mould board configured to engage with (for example penetrate) a soil substrate 300.

The agricultural implement 200 may be a plough, harrow, cultivator, weeder, hoe or a tiller.

The agricultural equipment system 100 may comprise a trajectory control system 400. The trajectory control system 400 may comprise one or more units, parts and/or subsystems, which may be provided on the drive unit 500, the agricultural implement 200 and/or elsewhere. In the figures the trajectory control system 400 is represented schematically as a single "box", connected to (e.g. in communication with) an actuator by dashed lines.

The trajectory control system 400 may comprise high precision Global Positioning System (GPS) / Real-Time Kinematic (RTK) equipment to generate data which may be used to determine direction of travel and changes in direction.

The trajectory control system 400 may comprise radar (e.g. stereo radar) or Light Detection and Ranging (lidar) systems, which may determine direction of travel and changes in direction based on observed changes, for example by correlating consecutive images taken with radar (e.g. stereo radar) or Light Detection and Ranging (lidar) systems.

The trajectory control system 400 may comprise a digital compass to generate data which may be used to determine direction of travel and changes in direction.

The trajectory control system 400 may, in dependence of data received from the above examples, or other suitable equipment, calculate deviation from a target/intended/desired direction and generate control movement (e.g. perform a movement action) of the agricultural implement 200 relative to the drive unit 500 and/or soil substrate 300.

The trajectory control system 400 and steering system 520 may be operable in dependence of each other to achieve a desired trajectory of the drive unit 500.

The trajectory control system may operate in dependence of the steering system, for example to achieve the desired trajectory as indicated by the steering system.

The trajectory control system may have a mode of operation in which it is operable to control the drive unit trajectory regardless of the operation of the steering mechanism. For example, in a scenario in which traction is lost on steering wheels, and the vehicle is off course, then the trajectory control system may be operable to provide a yaw rotation force to correct the trajectory of the drive unit.

The trajectory control system 400 may be operable to control the agricultural implement 200 to perform a movement action relative to the drive unit body 502. The movement action may be performed to controllably vary the magnitude, direction, point of attack (i.e. specific location where the drag force Fd is applied) and/or distribution of a drag force Fd generated by the engagement of the soil substrate engagement device 202 with the soil substrate 300.

The engagement of the soil substrate engagement device 202 with the soil substrate 300 may be controlled by the trajectory control system 400 to vary torque around the z-axis of the drive unit body 502. This will generate a yaw rotation force on the drive unit body 502 in an x-y plane defined by the x-axis and y-axis as the drive unit 500 translates with the agricultural implement 200 relative to the soil substrate 300. In this way, the trajectory control system 400 is operable to maintain or adjust the trajectory of the drive unit.

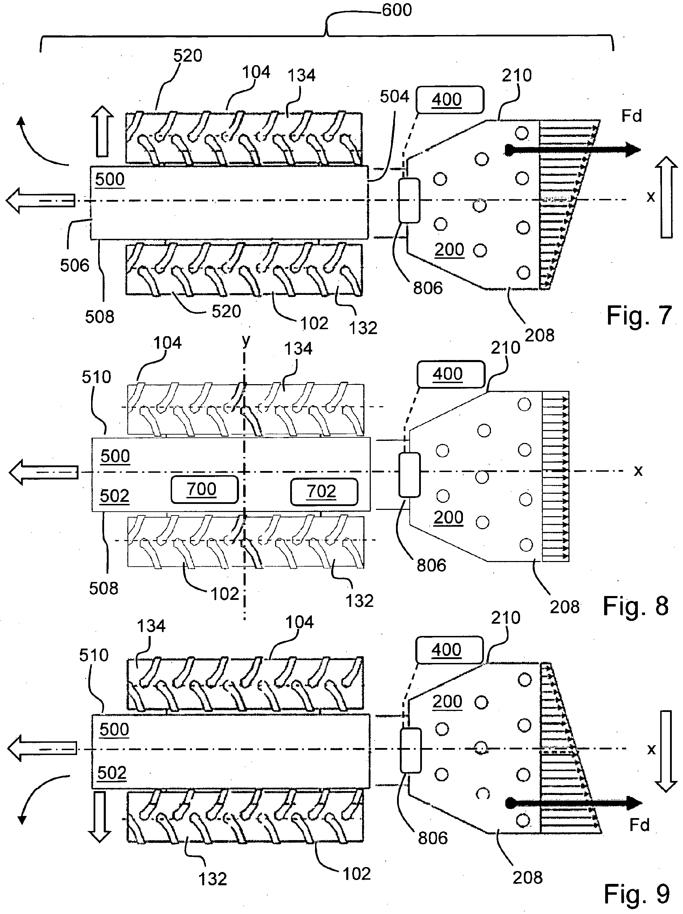

In the example of figures 7 to 9, figures 10 to 12 and figures 13 to 15, the movement action may comprise rolling the agricultural implement 200 about the x-axis (e.g. relative to the drive unit body 502 and/or soil substrate 300) to vary the extent to which the soil substrate engagement device 202 engages with the soil substrate 300 along its width.

For example, the movement action may comprise rolling the agricultural implement 200 about the x-axis to vary the extent to which the soil substrate engagement device 202 engages with the soil substrate 300 at points along its width, for example at positions where soil substrate penetration members 206 are provided.

Engagement of the soil substrate engagement device 202 with the substrate 300 may take the form of frictional contact with the surface of the soil substrate 300 and/or extending into the soil substrate 300.

The movement action may vary the extent of the engagement of the soil substrate engagement device 202 with the substrate 300 at different locations along the width of the agricultural implement 200. Hence the movement action may result in some regions of the soil substrate engagement device 200 creating a larger or small drag force than other regions of the substrate engagement device 200.

For example the drag force Fd created at one side of the agricultural implement 200 may be greater than at an opposite side of the agricultural implement 200 to thereby create torque around the z-axis of the drive unit body 502 to generate a yaw rotation force on the drive unit body 502 in the x-y plane defined by the x-axis and y-axis as the drive unit 500 translates with the agricultural implement 200 relative to the soil substrate 300.

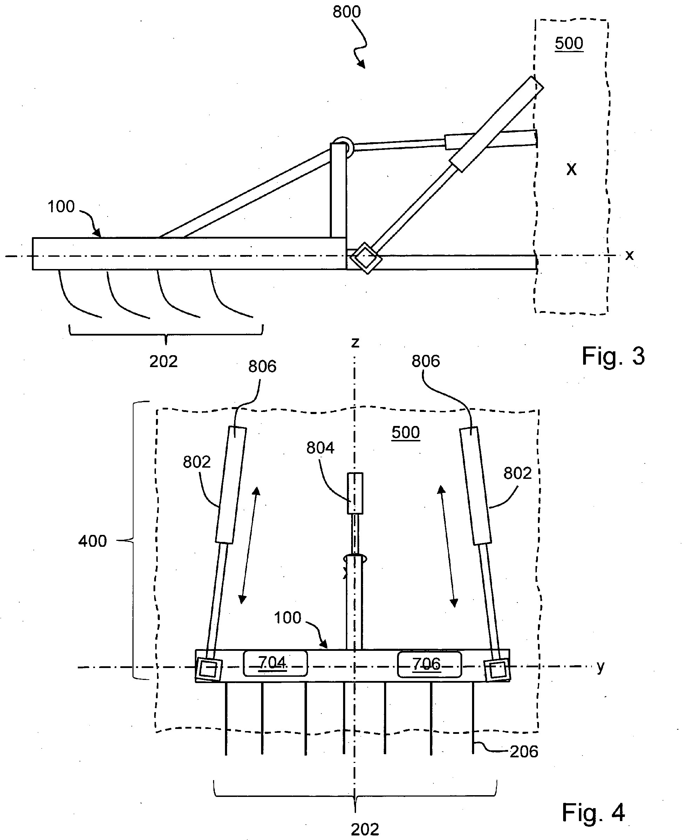

As illustrated in figures 3, 4 and figures 5, 6 the agricultural equipment system 100 may comprise a three-point hitch 800. The agricultural implement 200 may be coupled to the drive unit body 502 via the three-point hitch 800. By way of non-limiting example, in the arrangement illustrated in figures 7 to 15, the agricultural implement 200 may be coupled to the drive unit body 502 via the three-point hitch 800 of the present disclosure.

The three point hitch 800 may comprise two side link arms 802 spaced apart along the y-axis and a central link arm 804 located between the two side link arms 802. The agricultural implement 200 is provided with mounts for coupling to the central link arm 804 and the two side link arms 802. For example, the mounts for the side link arm 802 may be spaced apart from one another along the width of the agricultural implement 200, with a mount for the central link arm 804 provided between (and optionally offset from) the mounts for the side link arm 802. Hence the central link arm 804 and each of the link arms 802, 804 may be configured to couple the drive unit 500 to the agricultural implement 200. Each side link arm 802 may comprise a roll control actuator 806.

In the example shown in figures 3, 4, each roll control actuator 806 may be provided a part of a different side link arm 802, operable to adjust the length to the side link arm 802 of which it forms a part (as illustrated with arrows in figure 4), under the control of the trajectory control system 400 to execute a movement action.

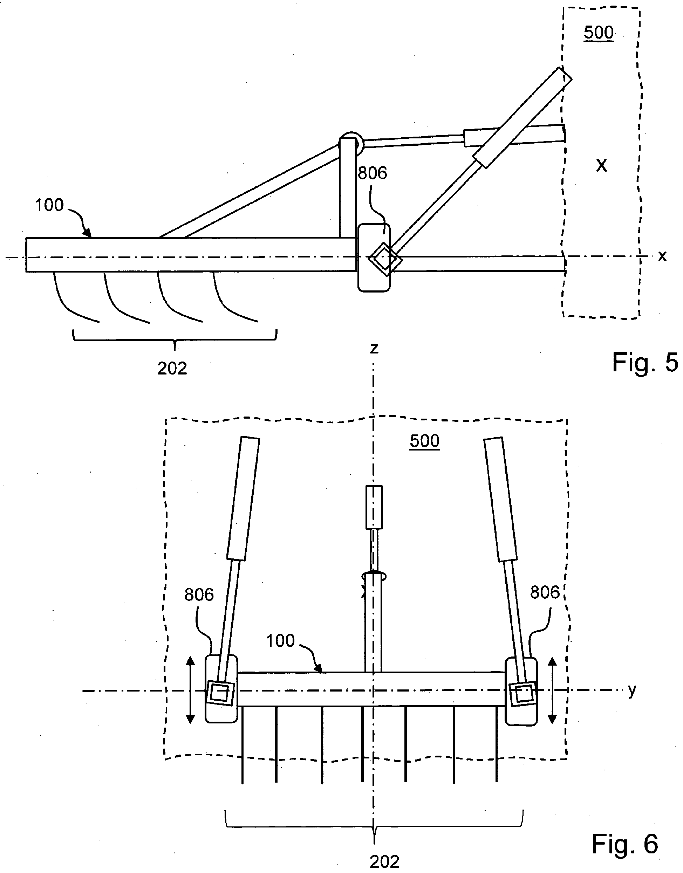

In the example shown in figures 5, 6, each roll control actuator 806 may be provided at an end of a different side link arm 802, such that the side link arm 802 is coupled to the agricultural implement 200 via the roll control actuator 806 on either side of the agricultural implement 200, operable to adjust the mount position of the end of each side link arm 802 in the z-axis direction (as illustrated with arrows in figure 6), under the control of the trajectory control system 400 to execute a movement action.

With reference to the example of figures 3, 4 and figures 5, 6, the trajectory control system 400 may be operable to control each roll control actuator 806 independently so as to roll the agricultural implement 200 about the x-axis.

By way of non limiting example, figures 7 to 15 illustrate an example in which the trajectory control system 400 may be operable to control each roll control actuator 806 independently so as to roll the agricultural implement 200 about the x-axis, which may be enabled by the arrangement shown in figures 3, 4 and figures 5, 6, or any other suitable arrangement.

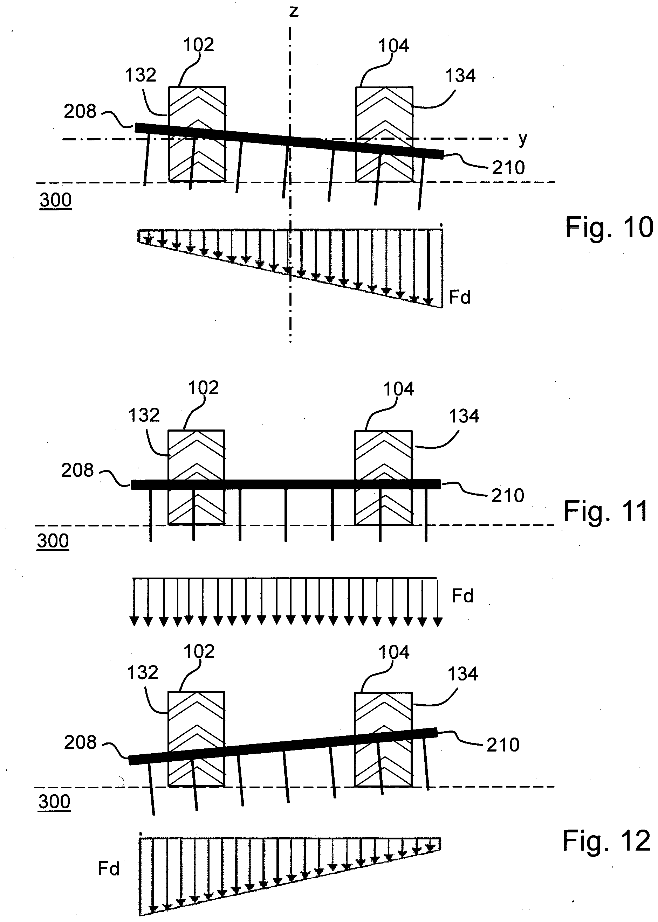

Figures 7 to 9 illustrate a plan view of an agricultural equipment assembly 600 according to the present disclosure. Figures 10 to 12 and figures 13 to 15 illustrate end views of the agricultural equipment assembly 600 shown in figures 7 to 9. Features of the drive unit 500 and agricultural implement 200 have been omitted and/or simplified in the figures in order to illustrate only selected features relevant to the operation of the arrangement of the present disclosure.

As illustrated in figures 7, 10 the movement action comprises rolling the agricultural implement 200 about the x-axis (e.g. relative to the drive unit body 502 and/or soil substrate 300) such that the second side 210 of the agricultural implement 200 is more deeply engaged with the soil substrate 300 than the first side 208, with the amount of engagement along the width of the agricultural implement 200 varying between the second side 210 and the first side 208. This may cause a drag force Fd which has a maximum value on the second side 210 of the agricultural implement 200, and thus will cause a torque around the z-axis of the drive unit body 502 to generate a yaw rotation force on the drive unit body 502 in a clockwise direction (as viewed from above) thereby resulting in a turning force to the second/right side 510 of the drive unit 500.

As illustrated in figures 8, 11 the movement action comprises rolling the agricultural implement 200 about the x-axis (e.g. relative to the drive unit body 502 and/or soil substrate 300) such that the agricultural implement 200 is evenly engaged with the soil substrate 300 along its width such that the amount of engagement along the width of the agricultural implement 200 will be constant between the first side 208 and the second side 210. Hence in this example, the drag force Fd has a constant value along the width of the agricultural implement 200, and thus will not cause a torque around the z-axis of the drive unit body 502, and hence not generate a yaw rotation force on the drive unit body 502, and so will not result in a turning force to the first/left side 508 or second/right side 510 of the drive unit 500.

As illustrated in figures 9, 12 the movement action comprises rolling the agricultural implement 200 about the x-axis (e.g. relative to the drive unit body 502 and/or soil substrate 300) such that the first side 208 of the agricultural implement 200 is more deeply engaged with the soil substrate 300 than the second side 210, with the amount of engagement along the width of the agricultural implement 200 varying between the first side 208 and the second side 210. This may cause a drag force Fd which has a maximum value nearby the first side 208 of the agricultural implement 200, and thus will cause a torque around the z-axis of the drive unit body 502 to generate a yaw rotation force on the drive unit body 502 in an anti-clockwise direction (as viewed from above) thereby resulting in a turning force to the first/left side 508 of the drive unit 500.

The balance of traction between the two sides 508, 510 of the drive unit 500 may be controlled by changing the relative engagement of features of the soil substrate engagement device 202 with the soil substrate 300. As illustrated in figures 7 to 9 and figures 10 to 12 this may be done by tipping the agricultural implement 200 from side to side.

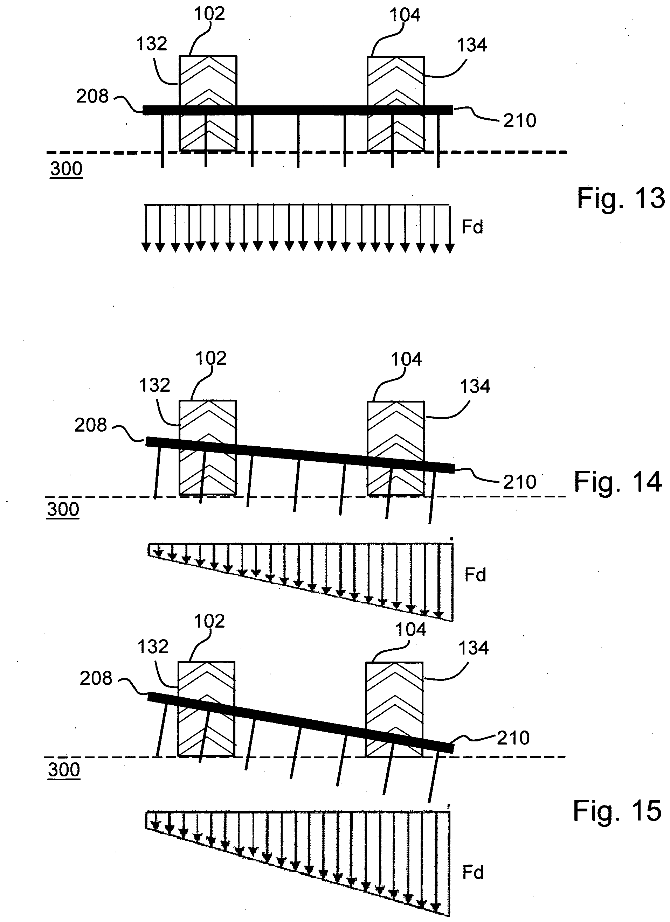

Figures 13 to 15 illustrate that the torque generated may be varied by changing the extent to which the agricultural implement 200 engages with the soil substrate 300. Figures 13 to 15 illustrate varying the torque to one side (i.e. to produce a turning effect to the right as shown on the page), although the same effect to produce a torque to the other side (i.e. to produce a turning effect to the right as shown on the page) by tilting the agricultural implement 200 in the opposite direction. Hence in figure 13, with the agricultural implement 200 engaged with the soil substrate an equal amount along its width, no turning torque is produced. In figure 14, with the agricultural implement 200 rolled to one side by a first angle around the x-axis, it is engaged at the second side 210 more than the first side 208, thereby producing a turning torque with a first value. In figure 15, with the agricultural implement 200 rolled further to one side by a second angle around the x-axis, it is engaged with the soil substrate 300 more at the second side 210 than in figure 14, thereby producing a turning torque with a second value greater than the first value.

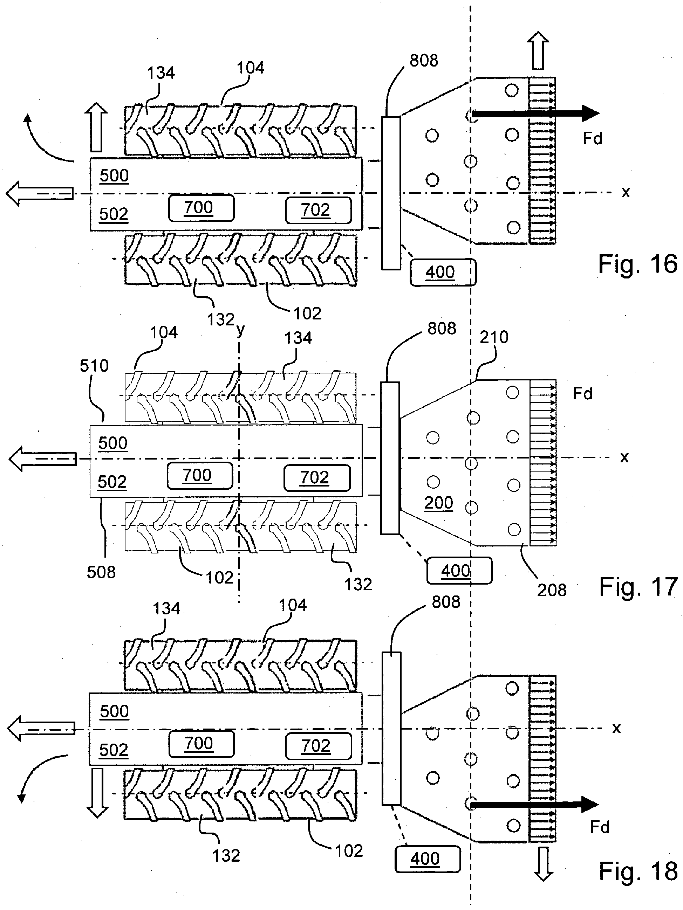

In the examples of figures 16 to 18 and figures 19 to 21, the movement action comprises translating the agricultural implement 200 in a direction along the y-axis relative to the drive unit body 502 to vary the location relative to the drive unit body 502 which the soil substrate engagement device 202 engages with (e.g. extends into) the soil substrate 300.

As illustrated in the examples of figures 16 to 18 and figures 19 to 21 there may be provided a y-axis translation actuator 808, the agricultural implement 200 being coupled to the drive unit body 502 via the y-axis translation actuator 808, the y-axis translation actuator 808 being operable to translate the agricultural implement 200 in a direction along the y-axis.

The y-axis translation actuator 808 may be of any appropriate configuration operable to couple the agricultural implement 200 to the drive unit body 502, support the agricultural implement 200 relative to the drive unit body 502 and translate the drive unit body 502 in a direction along the y-axis relative to the drive unit body 502 and/or the soil substrate 300.

The agricultural implement 200 may be moveable along a guide path defined by y-axis translation actuator 808 (for example as illustrated in figures 16 to 18).

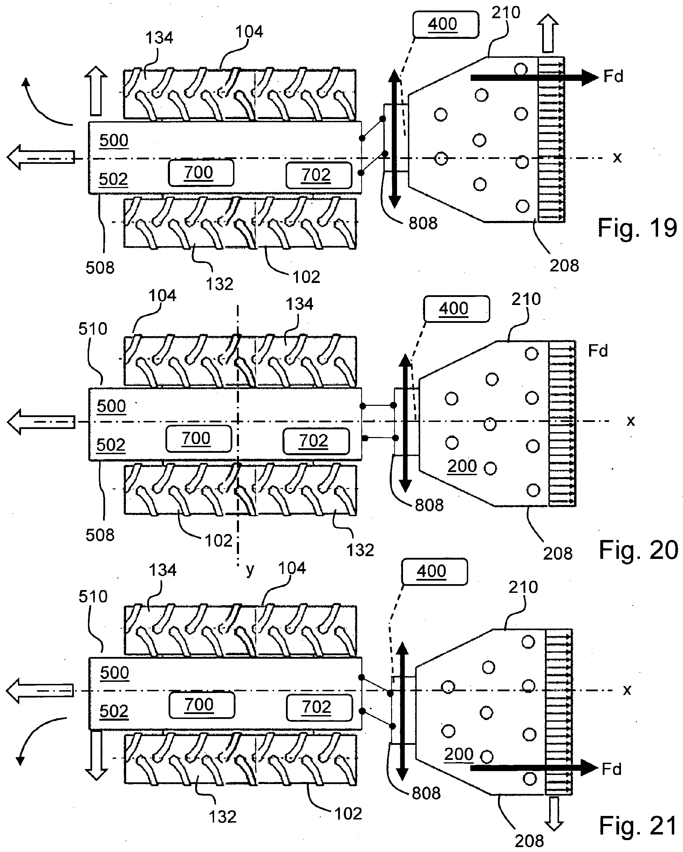

The agricultural implement 200 may be constrained to move by one or more pivot arms along a predetermined path from side, the pivot arms extending from, and pivotable by, the y-axis translation actuator 808 (for example as illustrated in figures 19 to 21).

As illustrated in figures 16, 19 the movement action comprises translating the agricultural implement 200 in a direction along the y-axis in a direction from the first (left) side 508 to the second (right) side 510 of the drive unit 500 so that the agricultural implement 200 is offset from the central axis of the drive unit 500 (where the central axis is aligned with, centred on and/or parallel to the x-axis) spaced away from the first (left) side 508 of the drive unit 500. This may cause a drag force Fd which is biased towards the second (right) side 510 of the drive unit 500, and thus will cause a torque around the z-axis of the drive unit body 502 to generate a yaw rotation force on the drive unit body 502 in a clockwise direction (as viewed from above) thereby resulting in a turning force to the second/right side 510 of the drive unit 500.

As illustrated in figures 17, 20 the movement action comprises translating the agricultural implement 200 in a direction along the y-axis so that the agricultural implement 200 is centred on the central axis of the drive unit 500 (where the central axis is aligned with, centred on and/or parallel to the x-axis). Hence in this example, the drag force Fd has a constant value along the width of the agricultural implement 200, and thus will not cause a torque around the z-axis of the drive unit body 502, and hence not generate a yaw rotation force on the drive unit body 502, and so will not result in a turning force to the first/left side 508 or second/right side 510 of the drive unit 500.

As illustrated in figures 18, 21 the movement action comprises translating the agricultural implement 200 in a direction along the y-axis in a direction from the second (right) side 510 to the first (left) side 508 of the drive unit 500 so that the agricultural implement 200 is offset from the central axis of the drive unit 500 (where the central axis is aligned with, centred on and/or parallel to the x-axis) spaced away from the second (right) side 510 of the drive unit 500. This may cause a drag force Fd which is biased towards the first (left) side 508 of the drive unit 500, and thus will cause a torque around the z-axis of the drive unit body 502 to generate a yaw rotation force on the drive unit body 502 in an anti-clockwise direction (as viewed from above) thereby resulting in a turning force to the first (left) side 508 of the drive unit 500.

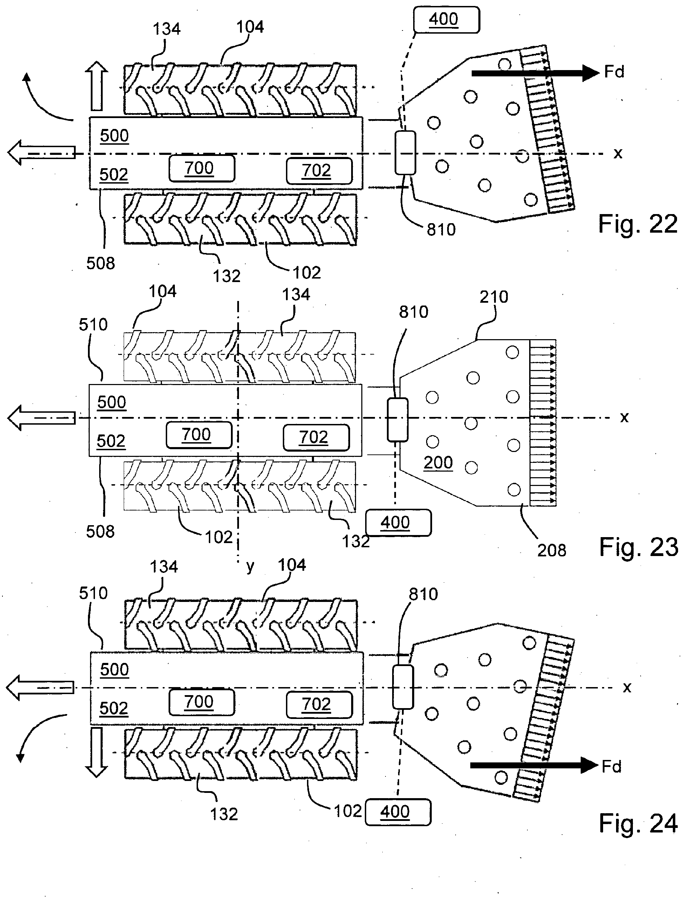

In the examples of figures 22 to 24 and figures 25 to 27, the movement action comprises pivoting the agricultural implement 200 about a direction parallel to the z-axis relative to the drive unit body 502 to vary the angle which the soil substrate engagement device 202 engages with (e.g. extends into) the soil substrate 300 along its width.

As illustrated in figures 22 to 24 and figures 25 to 27 there may be provided comprising a z-axis pivot actuator 810, the agricultural implement 200 being coupled to the drive unit body 502 via the z-axis pivot actuator 810, the z-axis pivot actuator 810 being operable to pivot the agricultural implement 200 about a direction parallel to the z-axis.

The z-axis pivot actuator 810 may be of any appropriate configuration operable to couple the agricultural implement 200 to the drive unit body 502, support the agricultural implement 200 relative to the drive unit body 502 and pivot the agricultural implement 200 about a direction parallel to the z-axis relative to the drive unit body 502 and/or the soil substrate 300.

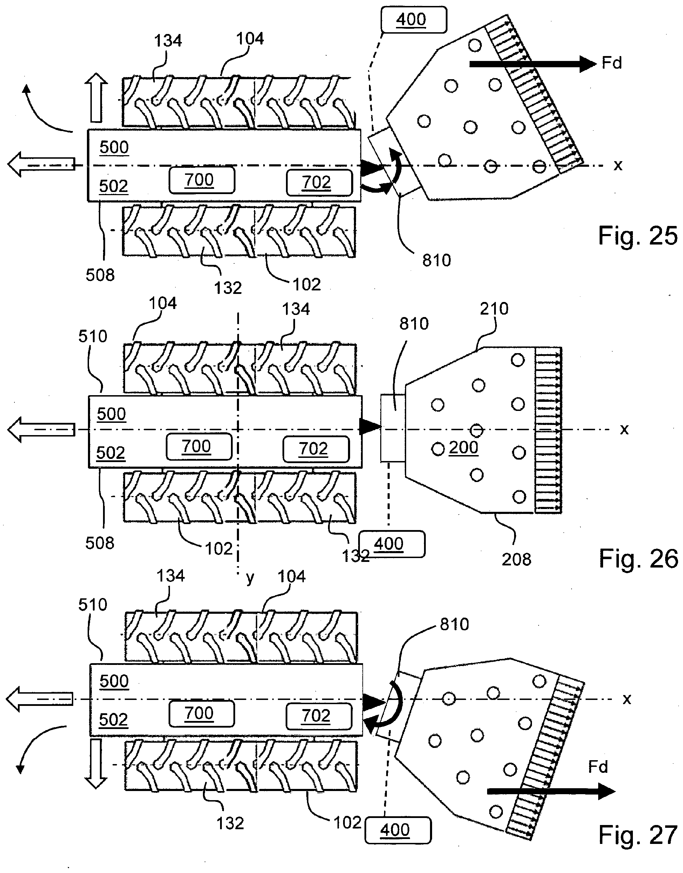

As illustrated in figures 22, 25 the movement action comprises pivoting the agricultural implement 200 about a direction parallel to the z-axis towards the second (right) side 510 of the drive unit body 502 and away from the first (left) side 508 of the drive unit body 502 (i.e. in anti-clockwise direction, as viewed from above). This may cause a drag force Fd which is biased towards the second (right) side 510 of the drive unit 500, and thus will cause a torque around the z-axis of the drive unit body 502 to generate a yaw rotation force on the drive unit body 502 in a clockwise direction (as viewed from above) thereby resulting in a turning force to the second/right side 510 of the drive unit 500.

As illustrated in figures 23, 26 the movement action comprises pivoting the agricultural implement 200 about a direction parallel to the z-axis so that the agricultural implement 200 is centred on the central axis of the drive unit 500 (where the central axis is aligned with, centred on and/or parallel to the x-axis). Hence in this example, the drag force Fd has a constant value along the width of the agricultural implement 200, and thus will not cause a torque around the z-axis of the drive unit body 502, and hence not generate a yaw rotation force on the drive unit body 502, and so will not result in a turning force to the first/left side 508 or second/right side 510 of the drive unit 500.

As illustrated in figures 24, 27 the movement action comprises pivoting the agricultural implement 200 about a direction parallel to the z-axis towards the first (left) side 508 of the drive unit body 502 and away from the second (right) side 510 of the drive unit body 502 (i.e. in a clockwise direction, as viewed from above). This may cause a drag force Fd which is biased towards the first (left) side 508 of the drive unit 500, and thus will cause a torque around the z-axis of the drive unit body 502 to generate a yaw rotation force on the drive unit body 502 in an anti-clockwise direction (as viewed from above) thereby resulting in a turning force to the first/left side 508 of the drive unit 500.

The agricultural equipment system 100 may comprise arrangements which enable one of the movement actions described, or may comprise arrangements which enable two or more of the movement actions described.

In each example, in response to the trajectory control system 400 detecting an unintended lateral movement of the drive unit 500, the trajectory control system 400 is operable to control the agricultural implement 200 to perform the movement action to change the yaw rotation force on the drive unit body 502 in the x-y plane as the drive unit 500 translates with the agricultural implement 200 relative to the soil substrate 300.

The trajectory control system 400 may comprise one or more sensor systems 700, 702, 704, 706. The trajectory control system 400 may be operable to control the agricultural implement to perform the movement action in dependence of data obtained from the or each sensor system.

The agricultural equipment system 100 may comprise a positioning sensor system 700 operable to record positioning of the vehicle relative to an intended trajectory.

The agricultural equipment system 100 may comprise a traction sensor system 702 operable to record traction between the drive unit 500 and the soil substrate 300 on the first side 508 and second side 510 of the drive unit 500.

The agricultural equipment system 100 may comprise a depth sensor system 704 operable to record depth of soil substrate engagement device 202 in the soil substrate 300 its width.

The depth sensor system 704 may be operable to record depth of the soil substrate penetration members 206 in the soil substrate 300 at points/location along the width of the soil substrate engagement device 202.

The agricultural equipment system 100 may comprise a positioning sensor system 706 located on the trajectory control system 400 to record a roll angle of the soil substrate engagement device 202 about the x-axis (for example relative to the drive unit body).

The agricultural equipment system 100 may comprise a positioning sensor system 706 located on the trajectory control system 400 to record a translation of the soil substrate engagement device 202 along the y-axis (for example relative to the drive unit body).

The agricultural equipment system 100 may comprise a positioning sensor system 706 located on the trajectory control system 400 to record a pivot angle of the soil substrate engagement device 202 about a direction parallel to the z-axis (for example relative to the drive unit body).

The agricultural equipment system 100 may comprise a force sensor system operable to measure the force by the agricultural implement 200 on the drive unit 500.

The agricultural equipment system 100 may comprise a motion sensor system operable to determine the momentum imparted to the drive unit 500 from the agricultural implement 200.

Hence there may be provided an agricultural equipment assembly 600 comprising an agricultural implement 200 comprising a soil substrate engagement device 202 configured to engage with a soil substrate 300, a trajectory control system 400 and a drive unit 500. The agricultural implement 200 may be coupled to the drive unit 500 such that the agricultural implement 200 extends from a first end 504 of the drive unit body 502. The drive unit 500 may be being operable to translate the agricultural implement 200 over and through the soil substrate 300. The soil substrate engagement device 202 may extend across the width of the agricultural device in a direction along a y-axis.

In operation, the method of adjusting a trajectory of the moving agricultural equipment assembly 600 may comprise the step of, in response to the trajectory control system 400 detecting an unintended lateral movement of the drive unit 500, the trajectory control system 400 controlling the agricultural implement 200 to perform a movement action relative to the drive unit body 502 to vary the magnitude, point of attack and/or distribution of a drag force Fd generated by the engagement of the soil substrate engagement device 202 with the soil substrate 300.

Hence movement action may thereby vary torque around the z-axis of the drive unit body 502 to generate a yaw rotation force on the drive unit body 502 in an x-y plane defined by the x-axis and y-axis as the drive unit 500 translates with the agricultural implement 200 relative to the soil substrate 300.

Hence there may be provided an agricultural equipment system which is configured to enable greater path control of a drive unit (for example an agricultural vehicle) compared to examples of the related art.

The provision of the trajectory control system 400 enables an agricultural implement 200 to be used to control the trajectory of the drive unit 500 it is coupled to when the drive unit 500 and agricultural implement 200 are moving along (e.g. relative to) the soil substrate 300.

An agricultural equipment assembly 600 (e.g. a tractor drive unit and agricultural implement/tool incorporating an agricultural equipment system according to the present disclosure) may thus have improved path following compared to a system with a vehicle having only differential steering alone.

The trajectory control system according to the invention and as illustrated in all embodiments above can be combined with other known ways of path control for vehicles, simultaneously or sequentially. For example, as it is detected that the vehicle with the agricultural implement is not following the intended path, first the steering of the vehicle can be used to correct, but if not, or only partially, successful, the trajectory control system might roll the implement in order to create an additional yaw torque to bring the actual path closer to the intended path.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An agricultural equipment system (100) comprising:
an agricultural implement (200) comprising a soil substrate engagement device (202) configured to engage with a soil substrate (300);
a trajectory control system (400);
the agricultural implement (200) being configured to be coupled to a body (502) of a drive unit (500) such that the agricultural implement (200) extends from a first end (504) of the drive unit body (502);
wherein the drive unit (500) is operable to translate the agricultural implement (200) relative to the soil substrate (300); the drive unit body (502) extends along an x-axis, the first end (504) of the drive unit body (502) and a second end (506) of the drive unit body (502) being spaced apart from one another along the x-axis; the drive unit body (502) extending along a y-axis, a first side (508) of the drive unit body (502) and a second side (510) of the drive unit body (502) spaced apart from one another along the y-axis; the x-axis being at right angles to the y-axis; the drive unit body (502) extending along a z-axis, the z-axis being at right angles to the x-axis and y-axis, an upper side (512) of the drive unit body (502) and a lower side (514) of the drive unit body (502) spaced apart from one another along the z-axis; wherein the z-axis defines a drive unit yaw axis;
a first side (208) of the agricultural implement (200) and a second side (210) of the agricultural implement (200) being spaced apart from one another in a direction along the y-axis, the soil substrate engagement device (202) extending across the width of the agricultural implement (200);
the trajectory control system (400) being operable to control the agricultural implement (200) to perform a movement action relative to the drive unit body (502) to vary the magnitude, direction, point of attack and/or distribution of a drag force (Fd) generated by the engagement of the soil substrate engagement device (202) with the soil substrate (300) to thereby vary torque around the z-axis of the drive unit body (502) to generate a yaw rotation force on the drive unit body (502) in an x-y plane defined by the x-axis and y-axis as the drive unit (500) translates with the agricultural implement (200) relative to the soil substrate (300).

2. An agricultural equipment system (100) as claimed in claim 1 wherein the movement action comprises rolling the agricultural implement (200) about the x-axis to vary the extent to which the soil substrate engagement device (202) engages with the soil substrate (300) along its width.

3. An agricultural equipment system (100) as claimed in claim 1 or claim 2 wherein the movement action comprises translating the agricultural implement (200) in a direction along the y-axis to vary the location relative to the drive unit body (502) which the soil substrate engagement device (202) engages with the soil substrate (300).

4. An agricultural equipment system (100) as claimed in any one of claims 1 to 3 wherein the movement action comprises pivoting the agricultural implement (200) about a direction parallel to the z-axis to vary the angle which the soil substrate engagement device (202) engages the soil substrate (300) along its width.

5. An agricultural equipment system (100) as claimed in any one of claims 1 to 4 wherein in response to the trajectory control system (400) detecting an unintended lateral movement of the drive unit (500), the trajectory control system (400) is operable to control the agricultural implement (200) to perform the movement action to change the yaw rotation force on the drive unit body (502) in the x-y plane as the drive unit (500) translates with the agricultural implement (200) relative to the soil substrate (300).

6. An agricultural equipment system (100) as claimed in any one of claims 1 to 5 further comprising at least one of :
(a) a positioning sensor system (700) operable to record positioning of the vehicle relative to an intended trajectory;
(b) a traction sensor system (702) operable to record traction between the drive unit (500) and the soil substrate (300) on the first side (508) and second side (510) of the drive unit (500);
(c) a depth sensor system (704) operable to record depth of soil substrate engagement device (202) in the soil substrate (300) its width;
(d) a positioning sensor system (706) located on the trajectory control system (400) to record a roll angle of the soil substrate engagement device (202) about the x-axis, a translation of the soil substrate engagement device (202) along the y-axis and/or a pivot angle of the soil substrate engagement device (202) about a direction parallel to the z-axis;
(e) a force sensor system operable to measure the force by the agricultural implement (200) on the drive unit (500); and/or
(f) a motion sensor system operable to determine the momentum imparted to the drive unit (500) from the agricultural implement (200); wherein the trajectory control system (400) is operable to control the agricultural implement to perform the movement action in dependence of data obtained from the or each sensor system.

7. An agricultural equipment system (100) as claimed in any one of claims 1 to 6 comprising a three point hitch (800), the agricultural implement (200) being coupled to the drive unit body (502) via the three point hitch (800), the three point hitch (800) comprising:
two side link arms (802) spaced apart along the y-axis;
a central link arm (804) located between the two side link arms (802);
each of the link arms (802, 804) configured to couple the drive unit (500) to the agricultural implement (200); and
each side link arm (802) comprising a roll control actuator (806);
the trajectory control system (400) operable to control each roll control actuator (806) independently so as to roll the agricultural implement (200) about the x-axis.

8. An agricultural equipment system (100) as claimed in any one of claims 1 to 7 comprising a y-axis translation actuator (808), the agricultural implement (200) being coupled to the drive unit body (502) via the y-axis translation actuator (808), the y-axis translation actuator (808) being operable to translate the agricultural implement (200) in a direction along the y-axis.

9. An agricultural equipment system (100) as claimed in any one of claims 1 to 8 comprising a z-axis pivot actuator (810), the agricultural implement (200) being coupled to the drive unit body (502) via the z-axis pivot actuator (810), the z-axis pivot actuator (810 being operable to pivot the agricultural implement (200) about a direction parallel to the z-axis.

10. An agricultural equipment system (100) as claimed in any one of claims 1 to 9 wherein the soil substrate engagement device (202) comprises a plurality of soil substrate penetration members (206) spaced apart along the width of the agricultural implement (200), each soil substrate penetration member (206) being configured to engage with and/or extend into the soil substrate (300).

11. An agricultural equipment system (100) as claimed in any one of claims 1 to 10 wherein the agricultural implement (200) is a plough, harrow, cultivator, weeder, hoe or a tiller.

12. An agricultural equipment assembly (600) comprising:
a drive unit (500) and
an agricultural equipment system (100) as claimed in any one of claims 1 to 11 coupled to the drive unit (500).

13. An agricultural equipment assembly (600) as claimed in claim 12 wherein the drive unit (500) comprises a steering system (520); and
the trajectory control system (400) and steering system (520) are operable in dependence of each other to achieve a desired trajectory of the drive unit (500).

14. An agricultural equipment assembly (600) as claimed in claim 12 or claim 13 wherein the drive unit (500) is a vehicle (110) provided as an autonomous vehicle or a manually operated vehicle.

15. An agricultural equipment system (100) as claimed in any one of claims 12 to 14 wherein the drive unit (500) is a wheeled vehicle and/or a tracked vehicle.

16. An agricultural equipment system (100) as claimed in any one of claims 12 to 15 wherein the agricultural equipment system (100) is configured for use in a row plantation.

17. A method of adjusting a trajectory of a moving agricultural equipment assembly (600), the agricultural equipment assembly (600) comprising:
an agricultural implement (200) comprising a soil substrate engagement device (202) configured to engage with a soil substrate (300);
a trajectory control system (400);
a drive unit (500), the agricultural implement (200) being coupled to the drive unit (500) such that the agricultural implement (200) extends from a first end (504) of the drive unit body (502);
the drive unit (500) being operable to translate the agricultural implement (200) over and through the soil substrate (300);
the soil substrate engagement device (202) extending across the width of the agricultural device in a direction along a y-axis;
the method comprising the steps of:
in response to the trajectory control system (400) detecting an unintended lateral movement of the drive unit (500), the trajectory control system (400) controlling the agricultural implement (200) to perform a movement action relative to the drive unit body (502) to vary the magnitude, point of attack and/or distribution of a drag force (Fd) generated by the engagement of the soil substrate engagement device (202) with the soil substrate (300) to thereby vary torque around the z-axis of the drive unit body (502) to generate a yaw rotation force on the drive unit body (502) in an x-y plane defined by the x-axis and y-axis as the drive unit (500) translates with the agricultural implement (200) relative to the soil substrate (300).
